# EUROPÄISCHE PATENTANMELDUNG

(11) **EP 2 388 579 A1**
(43) Veröffentlichungstag der Anmeldung: **23.11.2011**
(21) Anmeldenummer: 10005224.0
(22) Anmeldetag: 19.05.2010
(51) Int. Cl.: G01N 29/22, G01N 21/59, G01V 8/12

(54) **Sensor**

(71) Anmelder: Leuze electronic GmbH + Co. KG, 73277 Owen/Teck (DE)
(72) Erfinder: Merk, Thomas, 73240 Wendlingen (DE); Patz, Jürgen, 72660 Beuren (DE); Klaiber, Jörg, 71157 Hildrizhausen (DE)
(74) Vertreter: Ruckh, Rainer Gerhard

(57) **Zusammenfassung**

Die Erfindung betrifft einen Sensor mit einem gabelförmigen Gehäuse. Dieses weist als ersten Gabelarm ein Sendergehäuseteil (2) auf, in welchem ein Strahlung emittierender Sender (5) integriert ist, und als zweiten Gabelarm ein Empfängergehäuseteil (3), in welchem ein Strahlung empfangender Empfänger (6) integriert ist. Das Sendergehäuseteil (2) und das Empfängergehäuseteil (3) sind über ein Bestandteil des Gehäuses bildendes Verbindungsteil (4) verbunden, welches Einstellmittel aufweist, so dass der Abstand zwischen Sendergehäuseteil (2) und Empfängergehäuseteil (3) einstellbar ist.

## Beschreibung

Die Erfindung betrifft einen Sensor gemäß dem Oberbegriff des Anspruchs 1.

Derartige Sensoren können insbesondere als Ultraschallsensoren ausgebildet sein. Der Sender und der Empfänger eines solchen Ultraschallsensors sind dann von Ultraschallwandlern gebildet, die als Strahlung Ultraschallwellen emittieren beziehungsweise empfangen. Die Ultraschallwellen des Ultraschallsensors durchlaufen den Zwischenraum zwischen den Gabelarmen des Gehäuses des Ultraschallsensors, das heißt dieser Zwischenraum bildet einen Überwachungsbereich, innerhalb dessen Objekte erfassbar sind. Zur Objektdetektion wird die Schwächung der Ultraschallwellen, die bei dessen Durchtritt durch die zu erfassenden Objekte auftritt, gemessen.

Abhängig von der jeweiligen Applikation und insbesondere von der Beschaffenheit der zu detektierenden Objekte sind unterschiedliche Abstände zwischen Sender und Empfänger erforderlich. Bei bekannten Ultraschallsensoren sind jedoch der Sender und Empfänger in einem Gehäuse angeordnet, in welchem die Gabelarme, in welchem der Sender und Empfänger angeordnet sind, fest und unveränderbar angeordnet sind.

Werden bei einer Anwendung die Randbedingungen für die Objekterfassung geändert, so dass eine Abstandsänderung zwischen Sender und Empfänger erforderlich wird, so muss dann der alte Ultraschallsensor mit einem ersten Abstand zwischen den Gabelarmen durch einen neuen Ultraschallsensor, bei welchem die Gabelarme einen anderen Abstand aufweisen, ausgetauscht werden. Damit aber muss eine Vielzahl unterschiedlicher Varianten vorgesehen werden. Dies ist fertigungstechnisch jedoch ungünstig und führt letztlich zu einer Erhöhung der Kosten, die zur Herstellung der Ultraschallsensoren oder allgemein der Sensoren erforderlich sind.

Der Erfindung liegt die Aufgabe zugrunde, einen dem Sensor der eingangs genannten Art bereitzustellen, welcher bei möglichst einfachem Aufbau eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Sensor weist ein gabelförmiges Gehäuse auf. Dieses weist als ersten Gabelarm ein Sendergehäuseteil auf, in welchem ein Strahlung emittierender Sender integriert ist, und als zweiten Gabelarm ein Empfängergehäuseteil, in welchem ein Strahlung empfangender Empfänger integriert ist. Das Sendergehäuseteil und das Empfängergehäuseteil sind über ein Bestandteil des Gehäuses bildendes Verbindungsteil verbunden, welches Einstellmittel aufweist, so dass der Abstand zwischen Sendergehäuseteil und Empfängergehäuseteil einstellbar ist.

Durch die Einstellbarkeit des Empfängergehäuseteils relativ zum Sendergehäuseteil kann der Abstand zwischen Sender und Empfänger variiert werden, wodurch der erfindungsgemäße Sensor einfach und schnell an unterschiedliche Applikationen angepasst werden kann.

Da somit ein Sensor für verschiedenartige Applikationen verwendet werden kann, brauchen keine unterschiedlichen Varianten des Sensors zur Abdeckung unterschiedlicher Applikationen eingesetzt werden, was die Kosten für die Herstellung des erfindungsgemäßen Sensors erheblich reduziert.

Ein weiterer wesentlicher Vorteil der mit den Einstellmitteln durchgeführten relativen Verstellung von Sendergehäuseteil und Empfängergehäuseteil besteht darin, dass diese derart durchgeführt wird, dass die Ausrichtung von Sender und Empfänger bei der Einstellung vollständig erhalten bleibt.

Gemäß einer ersten Ausführungsform der Erfindung ist das Verbindungsteil von einer fest mit dem Sensorgehäuseteil verbundenen Rampe gebildet, an welcher das Empfängergehäuseteil höhenverstellbar gelagert ist, wobei das Empfängergehäuseteil in diskreten Höhenstufen oder in kontinuierlich variierbaren Höhenlagen an der Rampe lagerbar ist.

Diese Ausführungsform bildet eine rein mechanische Verstellmöglichkeit des Empfängergehäuseteils relativ zum Sendergehäuseteil, welche einfach handhabbar ist und auch einen robusten, kostengünstigen Aufbau aufweist.

Alternativ kann das Verbindungsteil als Einstellmittel einen Faltenbalg, einen Teleskoparm oder einen Spindelmechanismus zur Abstandseinstellung zwischen Sendergehäuseteil und Empfängergehäuseteil aufweisen.

Hiermit ist eine besonders exakte und gegebenenfalls auch selbsttätig ablaufende Einstellung des Abstands zwischen Sendergehäuseteil und Empfängergehäuseteil möglich.

Schließlich kann auch das Verbindungsteil als Einstellmittel eine Gelenkverbindung zwischen Sendergehäuseteil und Empfängergehäuseteil bilden.

Generell kann zur Arretierung einer Einstellung von Sendergehäuseteil und Empfängergehäuseteil ein Rast- und/oder Klemm-Mechanismus vorgesehen sein, wodurch auf einfache Weise eine Arretierung einer gewünschten Einstellung von Sendergehäuseteil und Empfängergehäuseteil erhalten wird. Zudem können derartig ausgebildete Befestigungsmittel jederzeit wieder gelöst werden um von neuem eine Einstellung vornehmen zu können.

Gemäß einer vorteilhaften Ausführungsform der Erfindung sind als elektrische Verbindungen zwischen Sender und Empfänger flexible Leiterplatten und/oder Litzen vorgesehen.

Dabei sind die Elemente für die elektrische Verbindung zwischen Sender und Empfänger im Verbindungsteil angeordnet.

Diese flexiblen Elemente sind an unterschiedliche Abstände zwischen Sendergehäuseteil und Empfängergehäuseteil dadurch einfach anpassbar, dass diese je nach Abstand zusammen oder auseinander gezogen werden können.

Gemäß einer alternativen Ausgestaltung sind als elektrische Verbindung zwischen Sender und Empfänger induktive Kopplungselemente vorgesehen.

Die induktiven Kopplungselemente ermöglichen eine berührungslose Energie-und Datenübertragung. Auch diese Kopplungselemente können einfach an unterschiedliche Abstände zwischen Sendergehäuseteil und Empfängergehäuseteil angepasst werden. Vorteilhaft bei diesen Kopplungselementen ist weiterhin, dass deren Funktion äußerst unempfindlich gegen Umwelteinflüsse ist.

Besonders vorteilhaft ist bei einer vorgegebenen Einstellung von Sendergehäuseteil und Empfängergehäuseteil ein optimaler Arbeitspunkt des Senders und des Empfängers in einem Einlernvorgang einstellbar.

Durch diesen Einstellvorgang erfolgt ein vollständiger Abgleich der Parameterwerte der Sensorkomponenten, so dass der Sensor mit der neuen Einstellung des Sendergehäuseteils und Empfängergehäuseteils sofort in vollem Umfang funktionsbereit ist.

Der Sensor ist besonders vorteilhaft als Ultraschallsensor ausgebildet. Prinzipiell kann der Sensor auch auf einem anderen Detektionsprinzip beruhen, wobei der Sensor insbesondere als optischer Sensor ausgebildet sein kann.

Die Erfindung wird im Folgenden anhand der Zeichnungen erläutert. Es zeigen:
- Figur 1:: Erstes Ausführungsbeispiel des erfindungsgemäßen Sensors mit einem Gehäuse umfassend ein relativ zu einem Sendergehäuseteil einstellbaren Empfängergehäuseteil.
- Figur 2a, b:: Unterschiedliche Ansichten eines zweiten Ausführungsbeispiels des erfindungsgemäßen Sensors mit einem Empfängergehäuseteil in einer ersten Position relativ zu einem Sendergehäuseteil.
- Figur 2c, d:: Unterschiedliche Ansichten des Sensors gemäß den Figuren 2a, b mit dem Empfängergehäuseteil in einer zweiten Position relativ zum Sendergehäuseteil.
- Figur 3a:: Drittes Ausführungsbeispiel des erfindungsgemäßen Sensors mit einem Empfängergehäuseteil in einer ersten Position relativ zu einem Sendergehäuseteil.
- Figur 3b:: Sensor gemäß Figur 3a mit dem Empfängergehäuseteil in einer zweiten Position relativ zum Sendergehäuseteil.

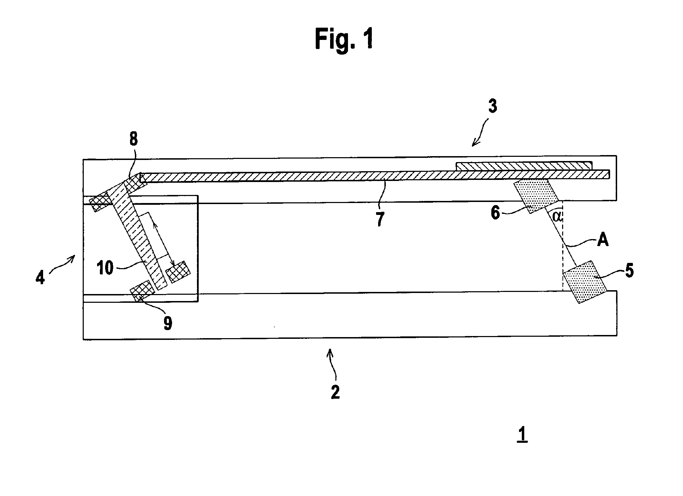

Figur 1 zeigt ein erstes Ausführungsbeispiel des erfindungsgemäßen Sensors, wobei der Sensor als Ultraschallsensor 1 ausgebildet ist. Der Sensor weist ein mehrteiliges Gehäuse auf, bestehend aus einem Sendergehäuseteil 2, einem Empfängergehäuseteil 3 und einem Verbindungsteil 4, welches die vorgenannten Gehäuseteile verbindet. Wie aus Figur 1 ersichtlich verlaufen die Längsachsen des Sendergehäuseteils 2 und Empfängergehäuseteils 3 in horizontaler Richtung parallel und in Abstand zueinander.

In dem Sendergehäuseteil 2 ist ein Ultraschallwellen emittierender Sender 5 vorgesehen, während im Empfängergehäuseteil 3 ein Ultraschallwellen empfangender Empfänger 6 vorgesehen ist. Der Sender 5 und der Empfänger 6 sind jeweils von einem Ultraschallwandler gebildet, wobei dessen Strahlachsen so ausgerichtet sind, dass diese gemeinsam entlang einer Achse A verlaufen. Diese Achse verläuft in einem Neigungswinkel α oder -α geneigt zur Vertikalen, wobei dieser Neigungswinkel α typisch im Bereich von 0 °- 60 ° und bevorzugt im Bereich von 20 ° - 40 ° liegt.

Der Empfänger 6 sitzt auf einer Leiterplatte 7 auf, auf welcher die Komponenten einer Auswerteeinheit zur Auswertung der im Empfänger 6 generierten Empfangssignale angeordnet sind.

Im Verbindungsteil 4 sind für eine induktive Energie- und Signalübertragung zwischen den elektronischen Komponenten des Sendergehäuseteils 2 und Empfängergehäuseteils 3 induktive Koppelungselemente bestehend aus einem Primärkreis 8, einem Sekundärkreis 9 und einem Ferritkern 10, der verschiebbar im Sekundärkreis 9 gelagert ist, vorgesehen. Die Verschieberichtung des Ferritkerns 10 ist mit einem Doppelpfeil veranschaulicht. Der Sender 5 ist über eine nicht dargestellte Leitung mit dem Sekundärkreis 9 verbunden. Die Leiterplatte 7 ist mit dem Primärkreis 8 leitend verbunden.

Der Zwischenraum zwischen dem Sendergehäuseteil 2 und dem Empfängergehäuseteil 3 bildet einen Überwachungsbereich, in welchem Objekte erfasst werden können. Die Objekterfassung erfolgt in der Auswerteeinheit derart, dass anhand der Empfangssignale die Schwächung der vom Sender 5 zum Empfänger 6 geführten Ultraschallwellen registriert wird, die durch ein im Überwachungsbereich vorhandenen Objekt verursacht wird. In der Auswerteeinheit wird dann in Abhängigkeit der Empfangssignale ein Objektfeststellungssignal generiert, das über einen nicht dargestellten Ausgang ausgegeben wird. Im einfachsten Fall ist das Objektfeststellungssignal als binäres Schaltsignal ausgebildet, dessen Schaltzustände angeben, ob sich ein Objekt im Überwachungsbereich befindet oder nicht.

Je nach Applikation können unterschiedliche Dimensionen des Überwachungsbereichs erforderlich sein. Um dies zu realisieren, ist bei dem Sensor gemäß Figur 1 der Abstand zwischen dem Sendergehäuseteil 2 und dem Empfangsgehäuseteil 3 einstellbar. Als Einstellmittel ist hierzu im Verbindungsteil 4 ein nicht dargestellter Teleskoparm vorgesehen. Mit diesem erfolgt die Verschiebung des Empfängergehäuseteils 3 relativ zum Sendergehäuseteil 2 derart, dass die Ausrichtung des Senders 5 zum Empfänger 6 erhalten bleibt, das heißt bei jeder Einstellung des Empfängergehäuseteils 3 verlaufen die Strahlachsen des Senders 5 und des Empfängers 6 gemäß der gemeinsamen Achse A.

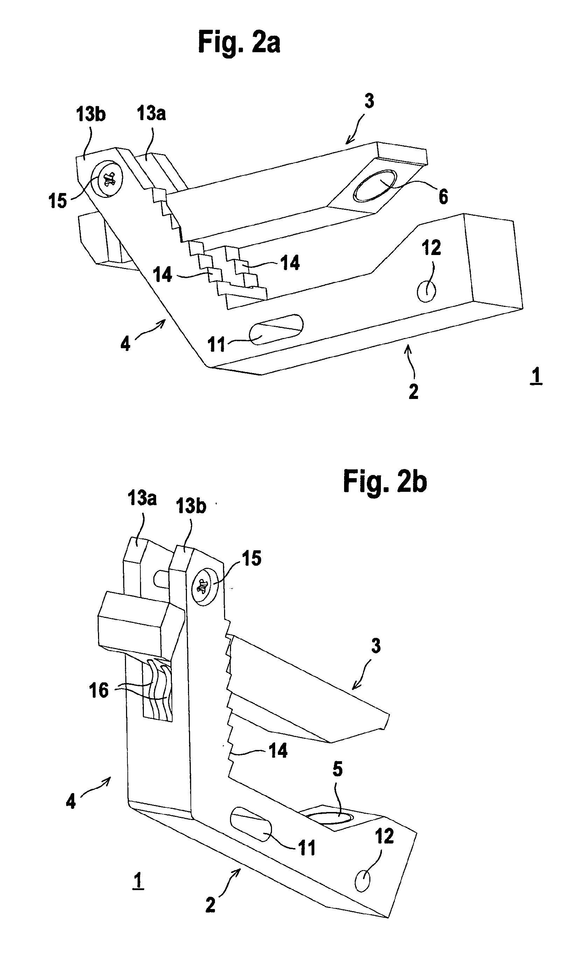

Die Figuren 2a bis 2d zeigen eine weitere Ausführungsform des erfindungsgemäßen Ultraschallsensors 1. Analog zur Ausführungsform gemäß Figur 1 weist auch der Ultraschallsensor 1 ein Gehäuse mit einem Sendergehäuseteil 2, einem Empfängergehäuseteil 3 und einem Verbindungsteil 4 auf. Dabei ist im Sendergehäuseteil 2 wieder der Sender 5 integriert, während im Empfängergehäuseteil 3 der Empfänger 6 mit der (nicht dargestellten) Auswerteeinheit integriert ist. Die Strahlachsen des Senders 5 und des Empfängers verlaufen wieder gemeinsam entlang der um den Winkel α zur Vertikalen geneigten Achse A.

In dem Sendergehäuseteil 2 sind zur Befestigung des Ultraschallsensors 1 an einer Aufnahme Befestigungsbohrungen 11, 12 vorgesehen. Das Verbindungsteil 4 ist im vorliegenden Fall einstückig mit dem Sendergehäuseteil 2 ausgebildet. Das Verbindungsteil 4 ist dabei rampenförmig ausgebildet, wobei der Neigungswinkel dieser Rampe an der Neigungswinkel α der Achse A angepasst ist und vorzugsweise diesen entspricht.

Die das Verbindungsteil 4 bildende Rampe weist in ihrem oberen Bereich zwei parallel zueinander verlaufende Schenkel 13 a, b auf. An den dem Sender 5 zugewandten Rändern der Schenkel 13 a, b sind aquidistant angeordnete Stufen 14 vorgesehen. Im Bereich der oberen Ränder sind die Schenkel 13 durch eine Schraube 15 verbunden, die in eine entsprechende Bohrung des Schenkels 13b durchsetzt und in eine Gewindebohrung des Schenkels 13a greift. Die Stufen 14 bilden diskrete Höheneinstellmöglichkeiten für das Empfängergehäuseteil 3.

Das Empfängergehäuseteil 3 ist zwischen den Schenkeln gelagert. Hierzu weist das Empfängergehäuseteil 3 ein schmäleres Segment auf, das zwischen den Schenkeln 13a, b liegt. Der breitere vordere Teil des Empfängergehäuseteils 3 liegt auf Stufen 14 der Schenkel 13 auf. Der verbreiterte hintere Teil des Empfängergehäuseteils 3 liegt an den hinteren Rändern der Schenkel 13 an. Dadurch ist das Empfängergehäuseteil 3 an der Rampe in einer bestimmten Höhenlage so lagegesichert, dass dessen Längsachse horizontal und parallel zur Längsachse des Sendergehäuseteils 2 verläuft.

Durch Anziehen der Schraube 15 wird das Empfängergehäuseteil 3 eingeklemmt und so in einer aktuellen Höhenlage fest gehalten. Um diese Höhenlage zu ändern muss nur die Schraube 15 gelockert werden, so dass dessen das Empfängergehäuseteil 3 auf andere Stufen 14 der Schenkel 13a, b aufgesetzt wird, wonach die Schraube 15 wieder festgezogen wird.

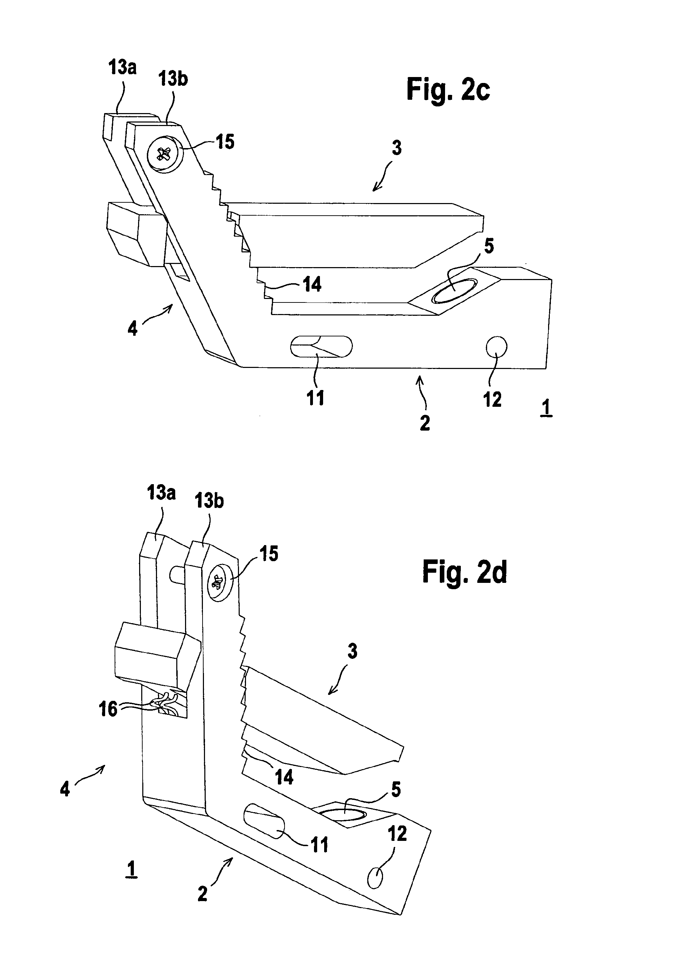

Die Figuren 2a, b zeigen das Empfängergehäuseteil 3 in einer ersten Höhenposition, die Figuren 2c, d zeigen das Empfängergehäuseteil 3 in einer zweiten Höhenposition. Wie der Vergleich dieser Einstellungen zeigt, bleibt die Ausrichtung des Senders 5 auf dem Empfänger 6 bei den verschiedenen Einstellungen erhalten.

Zur elektrischen Kopplung der erfinderischen Komponenten im Sendergehäuseteil 2 und Empfängergehäuseteil 3 sind im vorliegenden Fall flexible Litzen 16 vorgesehen. Diese können sich zusammen und auseinanderfalten, so dass diese für alle verschiedenen Höheneinstellungen eine elektrische Verbindung der elektrischen Komponenten des Sendergehäuseteils 2 und Empfängergehäuseteils 3 bilden können.

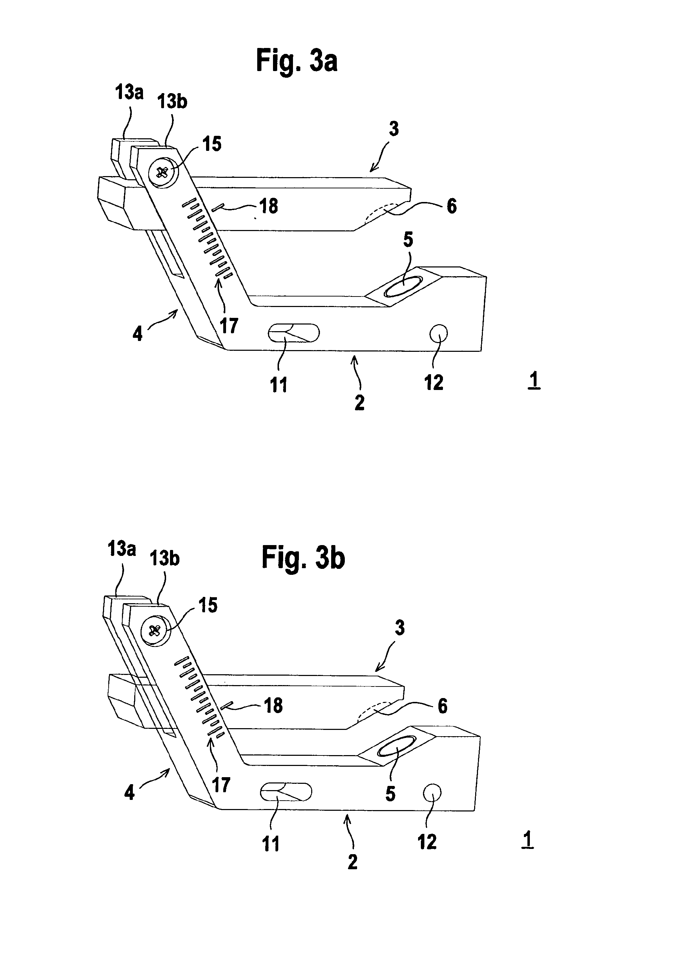

Die Figuren 3a, b zeigen eine Ausführungsform des Ultraschallsensors 1, die der Ausführungsform der Figuren 2a-d weitgehend entspricht. Im Unterschied zur Ausführungsform gemäß den Figuren 2a-d weist die Rampe gemäß des Verbindungsteils 4 gemäß den Figuren 3a, b keine Stufen 14 auf. Das verbreiterte hintere Ende des Empfängergehäuseteils 3 bildet in diesem Fall einen Anschlag, der flächig an den hinteren Rändern der Schenkel 13 der Rampe anlegbar ist, wodurch das Empfängergehäuseteil 3 parallel zum Sendergehäuseteil 2 ausgerichtet ist, wodurch das Empfängergehäuseteil 3 parallel zum Sendergehäuseteil 2 ausgerichtet ist. Durch Verschieben des Empfängergehäuseteils 3 entlang der Schenkel 13 kann nun die Höhenpositionen des Empfängergehäuseteils 3 kontinuierlich eingestellt werden. Die Fixierung der Höhenposition erfolgt wieder mittels der Schraube 15.

An der Außenseite des Schenkels 13 ist eine Skala 17 angeordnet. An der Außenseite des Empfängergehäuseteils 3 befindet sich ein Messstrich 18. Diese Einheiten bilden eine Anzeige für die aktuelle Höhenposition des Empfängergehäuseteils 3.

### Bezugszeichenliste

- (1): Ultraschallsensor
- (2): Sendergehäuseteil
- (3): Empfängergehäuseteil
- (4): Verbindungsteil
- (5): Sender
- (6): Empfänger
- (7): Leiterplatte
- (8): Primärkreis
- (9): Sekundärkreis
- (10): Ferritkern
- (11): Befestigungsbohrung
- (12): Befestigungsbohrung
- (13a): Schenkel
- (13b): Schenkel
- (14): Stufe
- (15): Schraube
- (16): Litze
- (17): Skala
- (18): Messstrich

## Patentansprüche

1. Sensor mit einem gabelförmigen Gehäuse, welches als ersten Gabelarm ein Sendergehäuseteil, in welchem ein Strahlung emittierender Sender integriert ist, und als zweiten Gabelarm ein Empfängergehäuseteil, in welchem ein Strahlung empfangender Empfänger (6) integriert ist, aufweist, **dadurch gekennzeichnet, dass** das Sendergehäuseteil (2) und das Empfängergehäuseteil (3) über ein Bestandteil des Gehäuses bildendes Verbindungsteil (4) verbunden sind, welches Einstellmittel aufweist, mittels derer der Abstand zwischen Sendergehäuseteil (2) und Empfängergehäuseteil (3) einstellbar ist.

2. Sensor nach Anspruch 1, **dadurch gekennzeichnet, dass** bei jeder Einstellung die Längsachsen des Sendergehäuseteils und des Empfängergehäuseteils parallel zueinander verlaufen.

3. Sensor nach einem der Ansprüche 1 oder 2, **dadurch gekennzeichnet, dass** der Sender (5) und der Empfänger (6) bei jeder Einstellung zusammenfallende Strahlachsen aufweisen.

4. Sensor nach Anspruch 3, **dadurch gekennzeichnet, dass** die Strahlachsen des Senders (5) und des Empfängers (6) in einem Neigungswinkel zu den Längsachsen des Sendergehäuseteils und des Empfängergehäuseteils geneigt verlaufen.

5. Sensor nach einem der Ansprüche 1 bis 4, **dadurch gekennzeichnet, dass** das Verbindungsteil (4) von einer fest mit dem Sensorgehäuseteil verbundenen Rampe gebildet ist, an welcher das Empfängergehäuseteil (3) höhenverstellbar gelagert ist.

6. Sensor nach Anspruch 5, **dadurch gekennzeichnet, dass** das Empfängergehäuseteil (3) in diskreten Höhenstufen oder in kontinuierlich variierbaren Höhenlagen an der Rampe lagerbar ist.

7. Sensor nach einem der Ansprüche 1 bis 4, **dadurch gekennzeichnet, dass** das Verbindungsteil (4) als Einstellmittel einen Faltenbalg, einen Teleskoparm oder einen Spindelmechanismus zur Abstandseinstellung zwischen Sendergehäuseteil (2) und Empfängergehäuseteil (3) aufweist.

8. Sensor nach einem der Ansprüche 1 bis 4, **dadurch gekennzeichnet, dass** das Verbindungsteil (4) als Einstellmittel eine Gelenkverbindung zwischen Sendergehäuseteil (2) und Empfängergehäuseteil (3) bildet.

9. Sensor nach einem der Ansprüche 1 bis 8, **dadurch gekennzeichnet, dass** zur Arretierung einer Einstellung von Sendergehäuseteil (2) und Empfängergehäuseteil (3) ein Rast- und/oder Klemm-Mechanismus vorgesehen ist.

10. Sensor nach einem der Ansprüche 1 bis 9, **dadurch gekennzeichnet, dass** als elektrische Verbindungen zwischen Sender (5) und Empfänger (6) flexible Leiterplatten (7) und/oder Litzen vorgesehen sind.

11. Sensor nach einem der Ansprüche 1 bis 9, **dadurch gekennzeichnet, dass** als elektrische Verbindung zwischen Sender (5) und Empfänger (6) induktive Kopplungselemente vorgesehen sind.

12. Sensor nach einem der Ansprüche 10 oder 12, **dadurch gekennzeichnet, dass** die Elemente für die elektrische Verbindung zwischen Sender (5) und Empfänger (6) im Verbindungsteil (4) angeordnet sind.

13. Sensor nach einem der Ansprüche 1 bis 12, **dadurch gekennzeichnet, dass** bei einer vorgegebenen Einstellung von Sendergehäuseteil (2) und Empfängergehäuseteil (3) ein optimaler Arbeitspunkt des Senders (5) und des Empfängers (6) in einem Einlernvorgang einstellbar ist.

14. Sensor nach einem der Ansprüche 1 bis 13, **dadurch gekennzeichnet, dass** dieser als Ultraschallsensor (1) ausgebildet ist.
